# EUROPÄISCHE PATENTSCHRIFT

(11) **EP 1 541 003 B1**
(45) Veröffentlichungstag und Bekanntmachung des Hinweises auf die Patenterteilung: **15.09.2010**
(21) Anmeldenummer: 04029006.6
(22) Anmeldetag: 08.12.2004
(51) Int. Cl.: A01B 61/04, A01B 21/08

(54) **Überlastsicherung, insbesondere für ein Bodenbearbeitungswerkzeug**
Overload protection in particular for soil working implement
Protecteur contre la surcharge pour outil de travail du sol

(30) Priorität: 12.12.2003 DE 10358208
(43) Veröffentlichungstag der Anmeldung: 15.06.2005
(73) Patentinhaber: Rabe Agri GmbH, 49152 Bad Essen (DE)
(72) Erfinder: Dahmann, Jörg, Dipl.-Ing., 49152 Bad Essen (DE)
(74) Vertreter: Tappe, Hartmut

(56) Entgegenhaltungen:
- DE-A1- 4 202 771
- DE-U1-202004 007 112
- FR-A- 2 637 444
- US-A- 2 729 442
- US-A- 3 687 479
- US-A- 6 102 132

## Beschreibung

Die Erfindung betrifft eine Überlastsicherung für ein Bodenbearbeitungswerkzeug gemäß des Oberbegriffs des Patentanspruches 1.

Eine derartige Überlastsicherung ist beispielsweise in der Deutschen Patentschrift DE 28 11 906 C2 vorgeschlagen. Die elastische Lagerung weist 4 in einem Quadratrohr angeordnete runde Gummielemente auf. Die Anordnung dieser Lagerung ist nur am Rohrende möglich. Auf einem Trägerrohr nebeneinander angeordnete Werkzeuge können mit dieser vorgeschlagenen Lagerung nicht einzeln gelagert werden.

In der deutschen Offenlegungsschrift DE 102 04 160 A1 ist eine elastische Lagerung für nebeneinander auf einem Trägerrohr angeordnete Bodenbearbeitungswerkzeuge beschrieben. Die elastische Lagerung ist teilbar und weist zwei Lagerschalen mit 4 Gummielementen auf. Die Gummielemente weisen in der Regel vor dem Verklemmen zwischen dem Quadratrohr und den Lagerschalen einen runden Querschnitt auf. Nach der Montage der Lagerung haben die Gummilagerelemente einen nahezu dreieckigen Querschnitt, dadurch erhalten die montierten Gummielemente eine starke Verquetschung , die sich auf das Gummimaterial nachteilig auswirken kann. Aufgrund der langen Klemmschrauben, die für das Verformen der Gummielemente erforderlich sind, ist für die Montage einer derartigen Lagerung ein erheblicher Schraubaufwand erforderlich.

Der Erfindung liegt die Aufgabe zugrunde, in einfacher Weise eine kostengünstige und montagefreundliche elastische Überlastsicherung zu gestalten.

Erfindungsgemäß wird diese Aufgabe mit den kennzeichnenden Merkmalen des Anspruchs 1 gelöst. Die erfindungsgemäße Überlastsicherung weist ein Trägerrohr mit zwischen den Lagerschalen angeordneten elastischen Lagerelementen auf, wobei die Lagerelemente im wesentlichen einen runden Querschnitt mit mindestens einer Abflachung aufweisen. Die minimale Länge der elastischen Elemente entspricht vorzugsweise der Breite der Lagerschale.

Weitere Vorteile und Merkmale der Erfindung gehen aus den Unteransprüchen sowie aus den Beispielbeschreibungen und Zeichnungen hervor. Hierbei zeigen die nachfolgenden Zeichnungen:

**Fig. 1** eine erfindungsgemäße Überlastsicherung mit Teilrahmen und Bodenbearbeitungswerkzeug in der Seitenansicht

**Fig. 2** eine Überlastsicherung mit Werkzeugträger und Bodenbearbeitungswerkzeug in der Draufsicht

**Fig. 3** eine Überlastsicherung mit 4 elastischen Lagerelementen in der Seitenansicht

**Fig. 4** eine Überlastsicherung mit 3 elastischen Lagerelementen auf einem Dreikanthohlprofil in der Seitenansicht.

**Fig. 5** den Querschnitt eines elastischen Lagerelementes

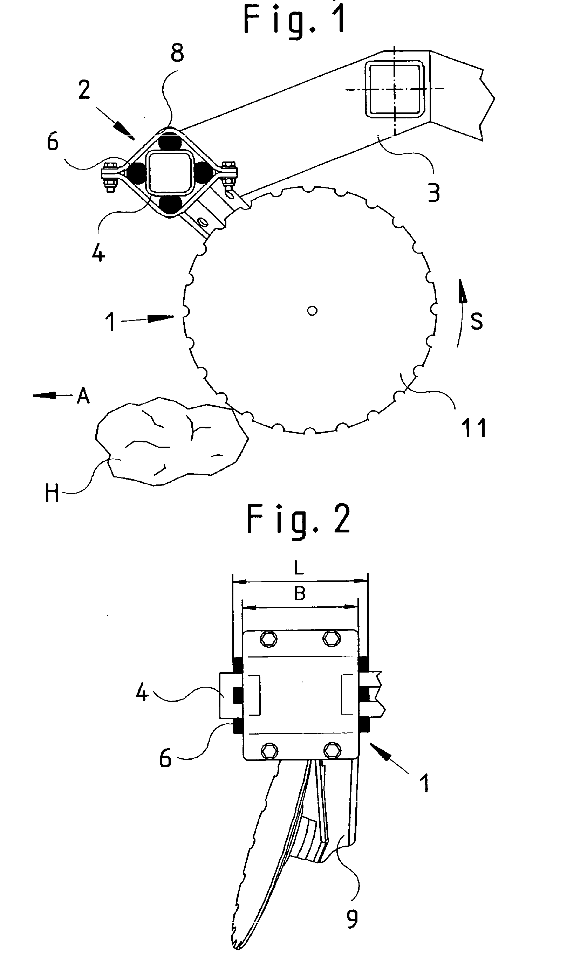

Die Überlastsicherung **2** in **Fig. 1** des Bodenbearbeitungswerkzeuges **1** mit dem Stiel **9** und der bodenangetriebenen Scheibe **11** weist eine elastische Lagerung **5** auf, die aus **4** elastischen Lagerelementen **6** und zwei Lagerschalen **8** besteht, wobei an der unteren Lagerschale **8** der Stiel **9** mit der Scheibe **11** zur Bodenbearbeitung befestigt ist.
Die elastischen Lagerelemente **6** sind reibschlüssig auf dem Werkzeugträger **4** des in Arbeitsrichtung **A** dargestellten Rahmens **3** eines nicht näher dargestellten Bodenbearbeitungsgerätes befestigt. Trifft die Scheibe **11** auf ein Hindernis **H**, so weicht sie in Schwenkrichtung **S** aus und die Lagerelemente **6** verformen sich dabei elastisch. Eine Beschädigung des Bodenbearbeitungswerkzeuges **1** wird durch diese elastische Lagerung **5** vermieden.

Der Werkzeugträger **4** sowie die elastischen Lagerelemente **6** mit der Länge **L** und die Lagerschalen **8** mit der Breite **B** sind in **Fig. 2** dargestellt. An der unteren Lagerschale **8** ist dabei der Stiel **9** mit der Scheibe **11** angeordnet. Es ist auch möglich, an der Lagerschale **8** andere vor Überlastung zu schützende Werkzeuge anzuordnen.

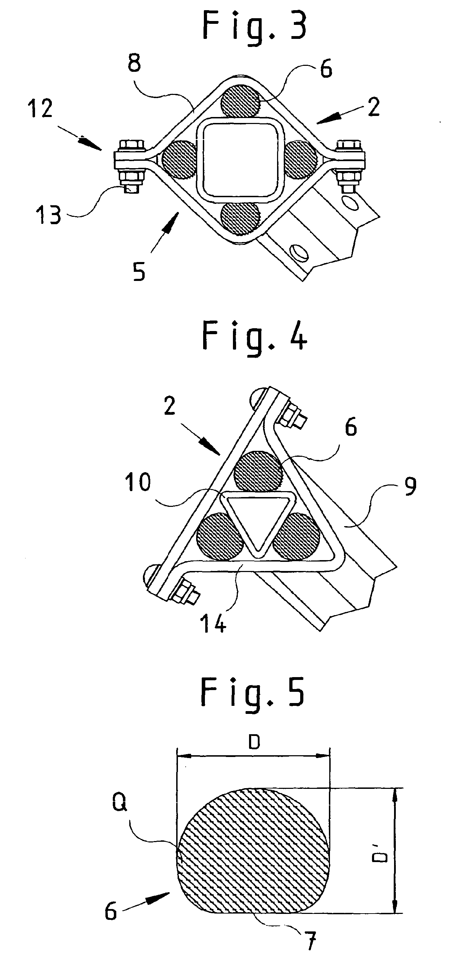

In **Fig. 3** sind die elastischen Lagerlemente **6** auf einem quadratischen Werkzeugträger **4** angeordnet. Die Lagerschalen **8** sind mit einer Schraubverbindung **12** zusammengepreßt, wobei das überstehende Gewinde **13** relativ kurz ist. Werkzeugträgerseitig weisen die elastischen Lagerelemente **6** eine Abflachung auf.

Ein weiteres Beispiel zur Überlastsicherung **2** zeigt **Fig. 4**. Auf einem Dreikanthohlprofil **10** sind 3 elastische Lagerelemente **6** angeordnet. Die Lagerelemente **6** sind dabei in der Lagerschale **14** verpreßt.

Die **Fig. 5** zeigt den Querschnitt des elastischen Lagerelementes **6** mit der Abflachung **7**. Der Durchmesser **D'** beträgt unmontiert vorzugsweise 85 % des Durchmessers **D**. Die Abflachung **7** bewirkt, daß das Lagerelement **6** bei der Montage nur geringfügig zusammengepreßt wird. Dabei ist die Kraft zum Ausweichen des Bodenbearbeitungswerkzeuges **1** bei rundem und abgeflachtem elastischen Lagerelement **6** nahezu gleich.

### Bezugszeichenliste

- 1: Bodenbearbeitungswerkzeug
- 2: Überlastsicherung
- 3: Rahmen
- 4: Werkzeugträger
- 5: elastische Lagerung
- 6: elastisches Lagerelement
- 7: Abflachung
- 8: Lagerschale
- 9: Stiel
- 10: Dreikanthohlprofil
- 11: Scheibe
- 12: Schraubverbindung
- 13: Gewinde
- 14: Lagerschale

- A: Arbeitsrichtung
- B: Breite
- L: Länge
- H: Hindernis
- D: Durchmesser
- D': Abflachungsdurchmesser
- Q: Querschnitt
- S: Schwenkrichtung

## Patentansprüche

1. Überlastsicherung **(2)**, insbesondere für ein Bodenbearbeitungswerkzeug **(1)**, zur Anordnung an einem Rahmen **(3)** einer Landmaschine, insbesondere eines Bodenbearbeitungsgerätes oder einer Sämaschine, mit mindestens einem im wesentlichen quer zur Arbeitsrichtung **(A)** angeordneten Werkzeugträger **(4)** zur Aufnahme von nebeneinander beabstandet angeordneten elastischen Lagerungen **(5),** mit mindestens 3 elastischen Lagerelementen **(6),** wobei die elastischen Lagerelemente **(6)** im nicht montierten Zustand im wesentlichen einen runden Querschnitt **(Q)** mit einer längsseitigen Abflachung **(7)** aufweisen, **dadurch gekennzeichnet, dass** der Abflachungsdurchmesser **(D')** des elastischen Lagerelementes **(6)** vorzugsweise 85 % des Durchmessers **(D)** beträgt und die Länge **(L)** größer oder gleich der Breite **(B)** der zur Überlastsicherung gehörenden Lagerschale **(8,14)** ist.

2. Überlastsicherung **(2)** nach Anspruch 1, **dadurch gekennzeichnet, dass** das elastische Lagerelement **(6)** Gummimaterial aufweist.

3. Überlastsicherung **(2)** nach Anspruch 1, **dadurch gekennzeichnet, dass** das elastische Lagerelement **(6)** elastisches Kunststoffmaterial aufweist.

## Claims

1. Overload protection device (2), in particular for an earth working tool (1), for arrangement on a frame (3) of an agricultural machine, in particular of an earth working device or a sowing machine, with at least one tool holder (4), which is arranged essentially transversely to the working direction (A), for accommodating elastic bearings (5), which are arranged at a distance adjacently to each other, with at least 3 elastic bearing elements (6), wherein the elastic bearing elements (6) essentially have a round cross section (Q) with a flattened portion (7) on the longitudinal side when in the non-mounted state, **characterised in that** the flattened portion diameter (D') of the elastic bearing element (6) is preferably 85% of the diameter (D), and the length (L) is greater than or equal to the width (B) of the bearing shell (8, 14) belonging to the overload protection device.

2. Overload protection device (2) according to Claim 1, **characterised in that** the elastic bearing element (6) has rubber material.

3. Overload protection device (2) according to Claim 1, **characterised in that** the elastic bearing element (6) has elastic plastic material.

## Revendications

1. Protection contre la surcharge (2), en particulier pour un outil de travail du sol (1), destiné à être agencée sur un cadre (3) d'une machine agricole, en particulier d'un appareil de travail du sol ou d'une semeuse, comprenant au moins un support d'outil (4) disposé essentiellement transversalement au sens de travail (A) pour recevoir des paliers élastiques (5) agencés à distance l'un à côté de l'autre, comprenant au moins trois éléments de paliers élastiques (6), sachant que les éléments de paliers élastiques (6) dans l'état non monté présentent essentiellement une section transversale (Q) ronde avec un méplat (7) latéral longitudinal, **caractérisée en ce que** le diamètre du méplat (D') de l'élément de palier élastique (6) fait de préférence 85% du diamètre (D) et la longueur (L) est supérieure ou égale à la largeur (B) de la coquille de coussinet (8, 14) faisant partie de la protection contre la surcharge.

2. Protection contre la surcharge (2) selon la revendication 1, **caractérisée en ce que** l'élément de palier élastique (6) présente un matériau de caoutchouc.

3. Protection contre la surcharge (2) selon la revendication 1, **caractérisée en ce que** l'élément de palier élastique (6) présente un matériau plastique élastique.
